# EUROPEAN PATENT APPLICATION

(11) **EP 3 066 917 A1**
(43) Date of publication of application: **14.09.2016**
(21) Application number: 16380006.3
(22) Date of filing: 10.03.2016
(51) Int. Cl.: A01K 13/00, A61D 9/00

(54) **SHORTENABLE TENSIONING REMOVABLE PROTECTIVE COLLAR FOR QUADRUPED ANIMALS**

(30) Priority: 10.03.2015 ES 201500184 P
(71) Applicant: Ciordia Navarro, Paula, 50003 Zaragoza (ES)
(72) Inventor: Ciordia Navarro, Paula, 50003 Zaragoza (ES)

(57) **Abstract**

A protective collar for quadruped animals with a cono shaped form in operational position made of a semi-rigid plastic material, comprised of a tensioning strap (8) inserted through one of its cut in "U" configuration (2) of the flat sheet semicircular configuration (1) which fixed on a conventional and marketed harness (9), what allowed protective collar to bear only on the neck and whiter of animal, so avoiding the permanent load overweight and hit on their head and ears; furthermore being customized according to every quadruped animal, because of its plurality of drawn guided-lines (3, 4 and 5) for trimming along the flat sheet semicircular configuration (1). Its closure mechanism is composed of two Velcro® strips, placed on straight perimeter edges (7a and 7b), on opposite sides and faces, hooking, being able to assemble it and remove it to rest animal and sanitize and shortage said invention.

## Description

### OBJECT OF THE INVENTION

The following invention, as expressed in the title of the present description, refers to a shortenable tensioning removable protective collar for quadruped animals, which acts to prevent convalescent and recuperating animals from bearing all load weight of most of ordinary protective collars on their ears and head and also being hitting by said protective collars. It means helping their recovery, due to the invention allows the animal to keep its natural position because this invention avoid friction and permanent pressure on these areas by collars.

This invention is composed of a flat sheet with a semicircular ring configuration that corresponds to the development of a cono shaped form in operational position, made of semi-rigid plastic material; a padded neck protection edging and a tensioning strap.

The shortenable tensioning removable protective collar for quadruped animals has very distinct functional characteristics from the rest of protective collar for animals because the present invention offers the possibility to cover the head, ears and/or neck damaged at the same time that allows a natural position and behaviour for the convalescent animal because the flat sheet in cono-shaped form of the invention is lifted above their ears and head in order to prevent its contact with any part of these areas.

One of the fundamental features which the invention proposes is the possibility of trimming the curved and straight perimeter edges of the flat sheet with a semicircular ring configuration, following the guide-lines on it, to adjust the invention to every animals' morphology (neck, head, snout), according to each specie or race -for example, two different of canine with different morphology. A bulldog has a wider neck than a Greyhound has it; by contrast, a Greyhound has a longer neck than a bulldog has it-.

In this way, we can remove the remaining pieces of the flat sheet with a semicircular ring configuration, avoiding the unnecessary load weight. Furthermore, the invention has a closure system composed of two Velcro® strips, which are hooked, located on the each straight perimeters edges of the flat sheet with a semicircular ring configuration, placed on face and opposite edge, what makes the invention to be easily fitted and removed, as many times are required (facilitating cures, giving them rest for eating, transporting) and rapidly. In addition, when the animal is cured, we can storage the invention for reuse in future need and have it always available. Due to their recovered flat shape, after unassembled, clean and disinfected, it can be stored anywhere taking very little space.

The tensioning strap allows us to attach the invention to a harness, fitting to the body of the animal, (the kind of harness already marketed and it may be optionally sold with said invention). Said tensioning strap, attached to the lower straight perimeter edge of the flat sheet with semicircular configuration, is inserted through one of its "U" cut configuration.

In this way, the point of support and load weight of the invention is located on the trunk and whiter of the animal and not on their head and ears, allowing a natural vision and mobility, the head with erect ears of said animal, and stopping the humiliation of feeling, over their head, the load weight of the protective collar. As it is said, the part of the protective collar of the invention which covers the head and ears is lifted above this area, meanwhile said parts are covered and protected against dirt and any knock by said invention. Avoiding, without doubts, the permanent friction and pressure on these areas that can affect very negatively to the character and the animal healing, because that turns them into beings that feel useless and clumsy, always with their head down and crashing into the corners, furniture and people. Consequently, it avoids a feelings of guilt to their owners, what makes them be reluctant to put it or remove it before the time required for total healing, what would make convalescence of the animal lengthen and everything more painful.

### BACKGROUND OF THE INVENTION

When animals suffer accidents, illnesses or surgical interventions, it is necessary to prevent them scratching or licking their wounds during their convalesce in order to protect surgical stitches or medications applied for their healing. For these proposes, several types of protective collars have existed for a long time. However, none of them, due to its technical and physical features and sizes can meet this essential and regular need in a generalised manner. Furthermore, the user's dissatisfaction toward this kind of protective collar sometimes leads to remove it before the required time to heal the animal.

Over the last years, different types of protective collar have come onto the market. For example, one of them is formed from a donut-shaped inflatable protective collar that preserves peripheral vision. However, none of them covers the ears and head if it is necessary to protect these areas. Likewise, other kind of protective collar is formed from a total flat ring attached to a harness or around a collar-neck, which are reusable and let animal a peripheral vision and head-up position. However these protective collars are completely outside to the angle of view of the animal, so they do not perceive the impossibility to go through places wearing this type of flat ring collar, what can cause knocking and stress for the animal. In Addition to that, this design does not allow them to lie down with their head and snout on the floor when they want to rest or sleep, due to half of the diameter of the circle corresponds to the distance between the lower part of the head with the soil. When they try it, it oppresses him neck, what makes it impossible to take their natural resting supine position.

Similarly, over the last years, a lot of traditional cono shaped collar have been developed in new and innovated manners, as fixed, foldable, adapted or detachable forms. Furthermore, these protective collars can be composed of softer flexible material in order to be more comfortable. However, all of them have the same problem: these kinds of protective collar are contacted to their quadruped animal's ears and head directly and permanently, where protective collar is leant on, hitting and pressing.

In this respect, significant negative facts relating to traditional protective collar, known as "Elisabeth collar" are detailed below. First, as these collars are generally form by part attached, only adjustable by the straight perimeter edges, we have to make complex manoeuvres to close it (moving tabs, flaps by many holes). Secondly, due to they are made of relatively rigid materials, there are always some hollow areas between set points and excess plastic parts, what sometimes makes us put some adhesive tapes on their joints as alternative of fixing loose pieces, what forces us not to remove it until the animal is cured. If we want to remove it, we should clear away the adhesive tapes and the loops, pulling to remove it. However, the protective collar can be broken in this process, because these collars are generally designed of a special closure system for not opening, so we will have to buy another or put again more adhesive tape in order not to open it if we want to fit it again.

As discussed, because of its closure and attaching system, those collars retain the loose remaining pieces after adjusting to the animal's neck what is an useless and unnecessary load weight. Said load overweight increases with the need of putting adhesives on joints and folds for the purpose of avoiding an accumulation of incrusted dirt between them and opening due to animal scratching attempts, hitting. According to that, the force of gravity acts in these areas of load overweight of protective collar, staying said part of the protective collar in the lower part of the animal's head as pendant way (corresponding to the area of the face, neck and chin of the animal), making even more pressure on their ears and head by bearing. Increasing dirt and food onto its joints because its plurality of holes between said joints, located near to animal's snout, are touching soil, what makes difficult or impossible to keep these protective collars sanitized.

In this respect, said maladjusted protective collars can hurt itself, a person, and destroy furniture and enclosures where they are, causing a feeling of rejection toward animals by people who are afraid of being hitting by the protective collar. Those animals are disoriented and stressed because of this permanent weight over their ears and head, which transforms their natural reactions, vision and behaviour, turning into violent and uncoordinated being due to their feeling of refused, humiliated, punished and hurt.

### DESCRIPTION OF THE INVENTION

The shortenable tensioning removable protective collar for quadruped animals proposed in the present invention is based on a basic flat sheet with a semicircular ring configuration, made of semi-rigid plastic material and cono shaped form (after setting), and some particular features which allow to solve the above-described problems in a easy and economical way. To this propose, the flat sheet with a semicircular ring configuration has a single set of machining in one of the straight perimeter edges, which consists on a plurality of holes aligned, which are shaped like "U" configuration, to insert the tensioning strap through one of said holes.

There are a plurality of drawn guide-lines along the curved and straight perimeter edges on both faces of the basic flat sheet with a semicircular ring configuration in order to customize it easily and shorten it, trimming as we might need, depending on every animal. In one particular, it may be desirable to select a comfortable position and size of the protective collar of the invention according to the morphology and injury or wound of the animal.

After customizing said flat sheet, we will fit the protective collar of the invention easily on an animal. The padded neck protection edging will have to be adjusted and attached on the lower curved edge of the flat sheet with a semicircular ring configuration, in order to protect the animal's neck and wither from being contact with this area and bearing it. Besides, by providing an easy way to fasten the invention, it will be attached the closure system composed of two hook Velcro® strips, placing on the two edges straight perimeters of the flat sheet with a semicircular ring configuration, to different face and opposite edge. In this way, we can open and close the invention repeatedly without any effort every time we may need it.

The securing means are completed with the consolidation of the protective collar of the invention by means of the tensioning trap, which attached to said flat sheet, inserting through one of the cuts in "U" configuration (choosing the height of the cut according to the animal's morphology) and putting the closure system (type buckle or similar) of the tensioning strap on the external face of the protective collar to fix to the harness.

For this reason, the tensioning strap is the core of the invention because it makes feasible the up-right position of the shortenable tensioning removable protective collar for quadruped animals to a marketed harness, that animal may wear or with nylon, neoprene one, that may be provided with the invention. Thanks to it, the invention can be tensioned what makes it possible maintain bearing the shortenable tensioning removable protective collar for quadruped animals only around the lower curve edged perimetral on their neck and/or wither -as it is said, this area will be protective with a padded neck protection edging, as an internal reinforcement-.

Accordingly, present invention provides a protective collar that it allows animal to be able to stay in upright position, perform natural movements, have natural vision and attentions. Also we avoid them to hit and bear the load overweight, frequent on their ears and head by ordinary protective collar, which they used to suffer it every movement, influencing to their behaviour, state of mind and recovery from the illnesses.

### DESCRIPTION OF THE FIGURES

To complement the description being made below, and to make it easier to better understand the features of the invention, this descriptive report is accompanied by a set of drawing in which, for illustrative and not restrictive purposes, the following has been represented.

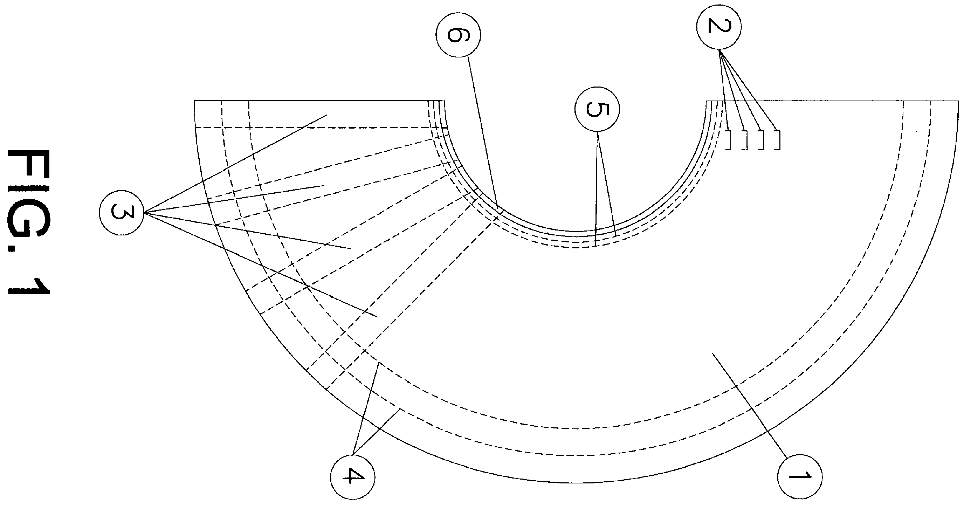

Figure 1 shows a plan view of the internal side of a flat sheet with a semicircular ring configuration, which shows a plurality of cuts in "U" configuration, which makes possible to be inserted the tensioning strap through one of them, according to every animal's morphology; and a plurality of drawn guided-lines to be able to trim and customize the curve and straight perimeter edges; align the two Velcro® strips, hooked, for making the fastener, and the padded neck protection.

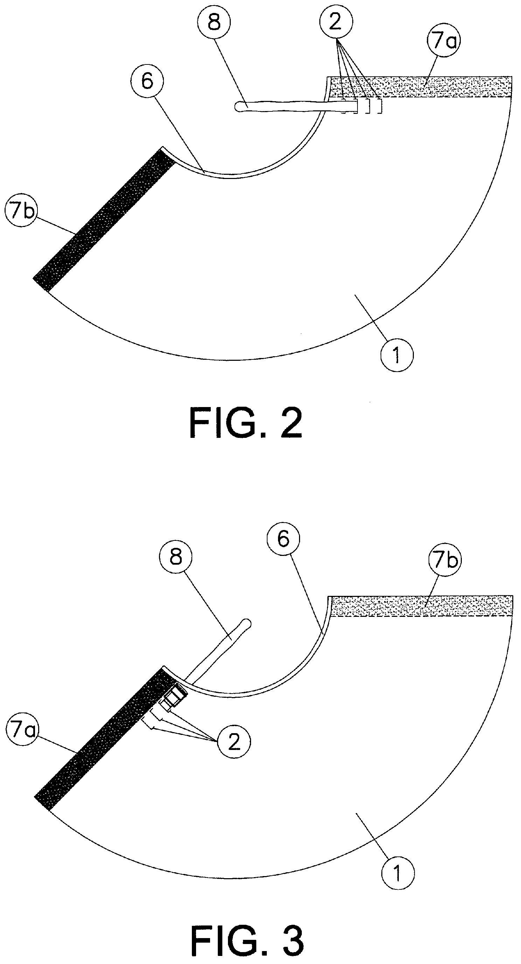

Figure 2 shows a plan view of the internal side outstretched of shortenable tensioning removable protective collar for quadruped animals; already customized according to animal's morphology; already placed the both Velcro® strips, which will be hooked, and the padded neck protection; inserted the tensioning strap through one of cuts in "U" configuration.
Figure 3 shows a plan view of the external side outstretched of shortenable tensioning removable protective collar for quadruped animals; already customized according to animal's morphology; already placed the both Velcro® strips which will be hooked and the padded neck protection; introduced the tensioning strap through one of cuts in "U" configuration.

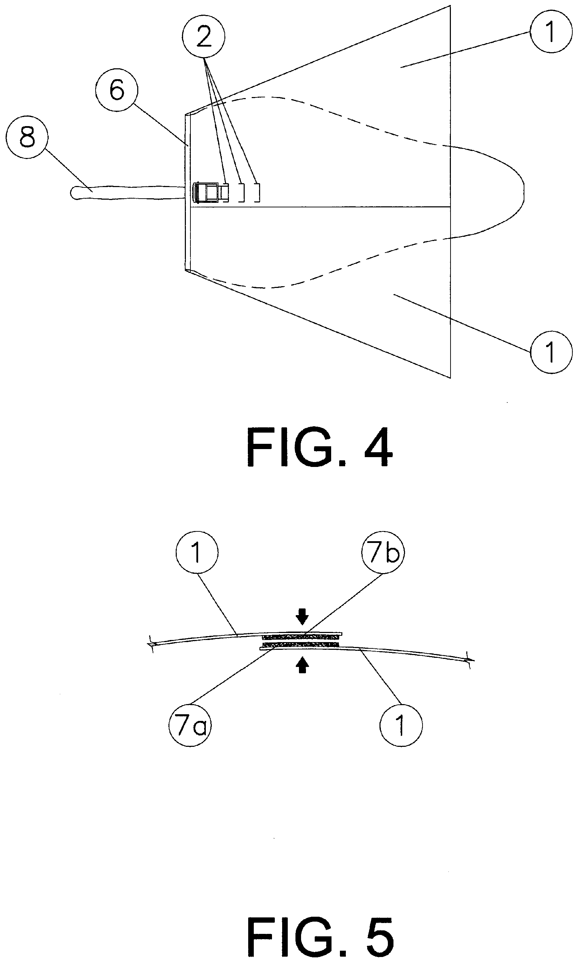

Figure 4 shows a plan view of the shortenable tensioning removable protective collar for quadruped animals, already fitted in its cono shaped form.
Figure 5 shows cross-sectional view of the shortenable tensioning removable protective collar for quadruped animals, showing the closure system in operational position, composed of two Velcro® strips which are hooked, placed on the two straight perimeters edges of the flat sheet with a semicircular ring configuration, attached one Velcro® strip to external face and another one to internal face, and opposite edges.

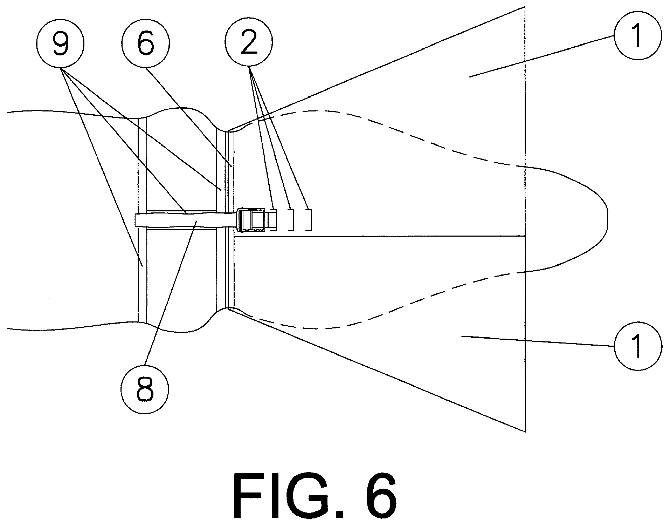

Figure 6 shows a plan view of the shortenable tensioning removable protective collar for quadruped animals, already in its cono shaped form and fitted on animal and tensioning with tensioning strap to harness; staying up the protective collar of the invention; thus the closure system is located in parallel manner above the animal's head.

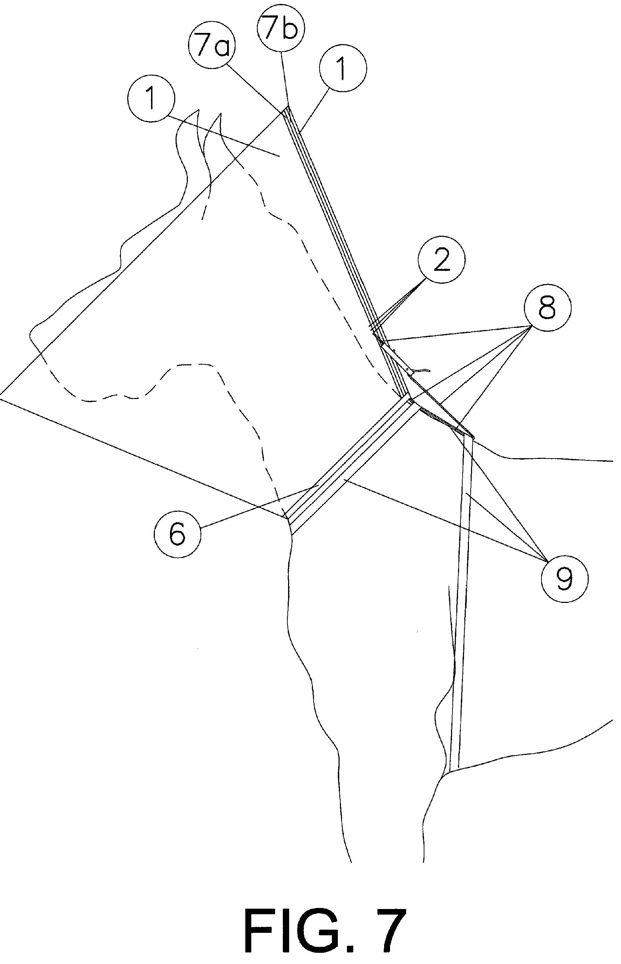

Figure 7 shows a longitudinal elevation view of the shortenable tensioning removable protective collar for quadruped animals, customized according to animal's morphology, fitted on said animal.

### DESCRIPTION OF A PREFERRED EMBODIMENT

In view of the above-described figures and according to the numbering provided, it should be noted that Figure 1, in this embodiment of the invention, the protective collar comprises a flat sheet with a semicircular ring configuration (1) and a plurality of drawn guide-lines along curve (4 and 5) and straight (3) perimeter edges of said flat sheet (1), which are useful to guide and adjust the trimming of said flat sheet with a semicircular ring configuration (1) according to animal's morphology and requiring; and then to be attached the padded neck protection edging (6) on the lower curve (5) perimeter edge of the flat sheet with a semicircular ring configuration (1) in order to cover it and protect the animal's neck and wither, due to said adjacent area is the only part of the protective collar of the invention which is permanently contacted with animal's body.

Secondly, guiding by drawn guided-lines along curve (4 and 5) and straight (3) perimeter edges on external and internal face of the flat sheet with a semicircular ring configuration (1), we can place the rest of elements which comprises the invention. Actually, the invention comprises a means of closure, made of a sandwich composite structure of two Velcro® strips over the flat sheet with a semicircular ring configuration, being located along the straight perimeter edges, one of them on the internal side (7b), as shown in Figure 2; and the another one located opposite on the external side (7a), as shown in Figure 3; in order to formed cono shaped structure in operating position of the flat sheet with a semicircular ring configuration (1), as shown in Figure 4, 6 and 7, when both opposite edges are hooked and assembled, as shown in closure position in Figure 5.

When the said flat blade (1) is formed into the in-use cono shape, the invention only needs to be sufficiently tensioned with the tensioning strap (8). In this way, user can fit and fix the invention to the harness (9) that animal usually wears and/or one sold with the protective collar of the invention. This mechanism of fixing is possible due to the tensioning strap (8) is introduced through one of the "U" cut chosen (2), placing the adjusting part of the tensioning strap (8), type buckle (or similar), on the external face of the flat sheet with a semicircular ring configuration (1), in order to adjust and tension said tensioning strap (8), as shown in Figure 4, in the way that keeps the collar of the invention attaching to harness (9) with the finality of maintaining the integrity of the invention and lifting the top of the flat sheet (1) in cono shaped form above ears and head, all of that makes load weight be distributed uniformly to animal's neck and wither, as shown in Figure 6. Figure 7 depicts the essential and assembled body of the invention in its operational position, when every elements are formed into a unit and fitted on a animal, and shown how the only part of the protective collar of the invention which is in permanent contact with animal is the lower curve edge, be protected animal's neck and whiter by the padded neck protection edging (6).

The closure system of the shortenable tensioning removable protective collar for quadruped animals, made of two Velcro® strips, which are hooked (7a and 7b), as shown in Figure 4 and 5, is always located lifting above the animal's ears and head, making not possible to turn around itself, due to the union of the tensioning strap (8) between the flat sheet with a semicircular ring configuration (1) and the harness (9) worn, inserted through best one of "U" cuts configuration (2) according to every animal.

The invention allows us to maintain sanitized the invention easily and wash it as many times it is needed, due to the possibility to fit and disassemble the shortenable tensioning removable protective collar for quadruped animals, what allows easily to recover the operating position (in cono shaped form) and storage (flat form), in order to preserve it in perfect state during usage; to reserve when animal does not need it and to be able to reuse it in future events. After disassembling the invention and removing the tensioning strap (8), we will able to carry it, storage it in everywhere easily, and to have it available, because of its flat and plain surface, without any protuberance and winkle element; what this invention provides autonomy to the keeper in order to have it available and fit it on an animal at any necessary and urgent moment.

## Claims

1. A shortenable tensioning removable protective collar for quadruped animals, having a cono shaped form configuration in operation position around the neck of an animal, and fixed on a conventional harness (9), comprising:
- a flat sheet with a semicircular ring configuration (1), made of semi-rigid plastic material or similar, which has a plurality of drawn guided-lines along straight (3) and curve (4 and 4) perimetral edges, in order to help customizing, shorten and trimming said flat sheet (1) according to animal's morphology, and make easily its assemble in cono-shaped form position; and a plurality of cuts in "U" (2) configuration aligned along one of the straight perimeter edge (3) in order to allow a lot of size adjustability;
- A closure mechanism, composed of two fabric strips which are hooked by contact, Velcro® type, putting along the two straight perimeter edges, one of them on the external face (7a), and another one on the internal face (7b), opposite edges;
- A tensioning strap (8), made of flexible material, fashioned from nylon, neoprene and/or similar, with a fastener system for adjusting, composed of buckle, clip, fabric strip, loop or similar closure system, depending on animal's morphology, ir order to insert said tensioning strap through one of the "U" cut configuration (2) according to said animal's morphology, and fixing the protective collar of the invention on a conventional marketed harness (9), in order to be able to tension it and allow an natural and head-up position for said animal;
- A padded neck protection edging (6), in order to place it on the lower curve perimeter edge of the flat sheet with a semicircular ring configuration (1).
